Europäisches Patentamt

European Patent Office

Office européen des brevets

(11) Veröffentlichungsnummer: **0 243 738 B1**

(12) # EUROPÄISCHE PATENTSCHRIFT

(45) Veröffentlichungstag der Patentschrift: 27.12.91

(51) Int. Cl.5: **H04N 3/185**

(21) Anmeldenummer: 87105113.2

(22) Anmeldetag: 07.04.87

(54) **Transformator für ein geregeltes Schaltnetzteil.**

(30) Priorität: 26.04.86 DE 3614184

(43) Veröffentlichungstag der Anmeldung:
04.11.87 Patentblatt 87/45

(45) Bekanntmachung des Hinweises auf die
Patenterteilung:
27.12.91 Patentblatt 91/52

(84) Benannte Vertragsstaaten:
AT BE CH DE ES FR GB IT LI LU NL SE

(56) Entgegenhaltungen:
EP-A- 0 071 008

PATENT ABSTRACTS OF JAPAN, Band 9, Nr.
53 (E-301)[1776], 7. März 1985; & JP-A-59 193
008

PATENT ABSTRACTS OF JAPAN, Band 8, Nr.
198 (E-265)[1635], 11. September 1984; & JP-
A-59 84 512

(73) Patentinhaber: Deutsche Thomson-Brandt
GmbH
Hermann-Schwer-Strasse 3 Postfach 1307
W-7730 Villingen-Schwenningen(DE)

(72) Erfinder: Hartmann, Uwe
Tallardstrasse 15
W-7730 Villingen-Schwenningen(DE)
Erfinder: Weisser, Erich
Hebelstrasse 17
W-7733 Mönchweiler(DE)

### Beschreibung

Die Erfindung geht aus von einem Transformator für ein geregeltes Schaltnetzteil mit mehreren Sekundärwicklungen zur Erzeugung von geregelten Gleichspannungen (siehe z.B. EP-A-0 071 008).

Schaltnetzteile werden bevorzugt in Fernsehempfängern eingesetzt, da sie sehr wirtschaftlich arbeiten und kostengünstig aufgebaut sind. Ein Schaltnetzteil ist bekanntlich derart aufgebaut, daß die Primärwicklung eines Transformators über einen getakteten elektronischen Schalter zwischen die ungeregelte gleichgerichtete Netzspannung und Bezugspotential geschaltet wird. Beim Abschalten des elektronischen Schalters wird die in der Primärwicklung gespeicherte magnetische Energie auf die Sekundärseite übertragen und dort mit Hilfe mehrerer Sekundärwicklungen zu Betriebsspannungen gleichgerichtet. Eine besonders stabil zu haltende Betriebsspannung ist die Speisespannung für die Zeilenendstufe und für die Hochspannungserzeugung. Es wird deshalb von dieser Betriebsspannung eine Regelinformation abgeleitet. Die Regelung erfolgt über die Änderung des Tastverhältnisses der den elektronischen Schalter ansteuernden Impulse. Somit ist die Regelschleife geschlossen und die Betriebsspannung ist gegen sekundärseitige Last- und primärseitige Spannungsänderungen stabilisiert. Die weiteren sekundärseitigen Spannungen werden automatisch gegen Netzspannungsschwankungen stabil gehalten. Gegen sekundärseitige Laständerungen ist die Stabilisierung der übrigen Sekundärspannungen jedoch nicht ausreichend. Es werden deshalb an die weiteren sekundären Betriebsspannungsquellen zusätzliche Längsregler einbaut, was aber mit Wirkungsgradverlusten und zusätzlichem Schaltungsaufwand erkauft werden muß. Besonders nachteilig wirken sich die durch die Tonendstufe hervorgerufenen Lastschwankungen bei der Wiedergabe des Bildes aus.

Der Erfindung liegt die Aufgabe zugrunde gerade die durch die Tonendstufe verursachten Lastschwankungen zu kompensieren, indem sich diese nicht auf eine sekundärseitige Betriebsspannung auswirkt Dies trifft besonders zu für die Betriebsspannung zur Versorgung der Vorstufen in einem Fernsehempfänger. Diese Aufgabe wird durch die im Patentanspruch 1 angegebene Erfindung gelöst. Weitere Ausgestaltungen der Erfindung ergeben sich aus den abhängigen Ansprüchen.

Nachstehend wird die Erfindung mit Hilfe der Zeichnung an einem Ausführungsbeispiel beschrieben.

Figur 1      zeigt die Erfindung in ihrem schaltungstechnischen Aufbau eines Schaltnetzteils;

Figur 2      zeigt den mechanischen Aufbau des Transformators des Schaltnetzteils.

Zunächst wird der wesentliche bekannte Aufbau eines Schaltnetzteils beschrieben. Die aus dem Wechselstromnetz mit Hilfe eines Gleichrichters 10 an einem Ladekondensator 11 erzeugte Gleichspannung UN ist an das eine Ende der Primärwicklung 1, 1', 1" eines Transformators 12 geschaltet. Das andere Ende der Primärwicklung 1, 1', 1" wird durch einen elektronischen Schalter 13, der mit in ihrer Breite modulierten Impulsen angesteuert wird, periodisch auf Bezugspotential gelegt und wieder abgeschaltet. Die bei der Abschaltung in der Primärwicklung 1, 1', 1" ·gespeicherte magnetische Energie wird auf die Sekundärseite übertragen. Die Sekundärseite besitzt mehrere Sekundärwicklungen. Die Wicklungen 2, 2' erzeugen z.B. über den Gleichrichter 14 an einem Kondensator 15 eine äußerst stabile Gleichspannung U1, die der Zeilenendstufe eines Fernsehempfängers zugeführt wird. An einem Stellwiderstand 16 kann ein Ist-Wert $U_{ist}$ abgegriffen werden, welcher einem Komparator 17 zugeführt wird, der diesen mit einem Soll-Wert $U_{soll}$ vergleicht. Die Abweichung von diesem Soll-Wert $U_{soll}$ wird einem Regelverstärker 18 mitgeteilt und daraus wird die Breite für die den elektronischen Schalter 13 ansteuernden Impulse in einem Modulator 19 erzeugt. Eine aus weiterer Teilwicklungen 3, 3' bestehende Sekundärwicklung erzeugt über den Gleichrichter 20 an einem Kondensator 21 eine niedrige Gleichspannung U2 zur Speisung weiterer Stufen wie z.B. die Vorstufen eines Fernsehempfängers. Die Sekundärwicklung 4 in Serie zur Sekundärwicklung 5 dient zur Erzeugung einer Gleichspannung U3 für die Tonendstufe über den Gleichrichter 22 an einem Kondensator 23. Die Wicklung 5 besitzt einen entgegengesetzten Wickelsinn zur Wicklung 4, wie dies durch einen Punkt am Ende der Wicklungen zum Ausdruck gebracht ist. Die Gleichspannung U3 für die Tonendstufe ergibt sich demnach aus der Differenz der Beträge der Spannungen an den Wicklungen 5 und 4.

Zur Vermeidung der Beeinflussung von Lastschwankungen durch die Tonendstufe und damit der Beeinflussung z.B. der Niedervoltspannung U2 ist die Kopplung der Wicklung 5 auf die Wicklungen 3 und 3' sehr lose gewählt, während die Kopplung der Wicklung 4 auf die Wicklungen 3 und 3' fest ist, d.h. die magnetische Wechselwirkung ist schwach bzw. groß. Durch die Polung der Wicklung 4 wird bei größerer Belastung Energie in die Wicklungen 3 und 3' übertragen, so daß die Spannung U2 durch die Belastung der Spannung U3 nicht oder nur wenig beeinflußt wird. Die Energie, die der Wicklung 5 z.B. durch eine größere Belastung entzogen wird, wird über die feste Kopplung der Wicklung 4 auf die Wicklung 3, 3' übertragen, so daß die Spannung U2 konstant bleibt. Es handelt sich um eine Brückenschaltung für die Kopplungen $K_F$ - (fest) und $K_L$ (lose) und es besteht Gleichgewicht, wenn folgende Bedingung erfüllt wird:

$N_5 . K_L = N_4 . K_F$, wobei N5 und N4 die Windungszahlen der Wicklungen 5 und 4 bedeuten. Je unterschiedlicher die Kopplungsfaktoren $K_F$ und $K_L$ ausgelegt werden können, desto größer ist das Verhältnis der Windungszahlen N5 zu N4. Bei der oben aufgestellten Gleichung ist die Kopplung der Wicklung 5 auf die Wicklung 4 vernachlässigt.

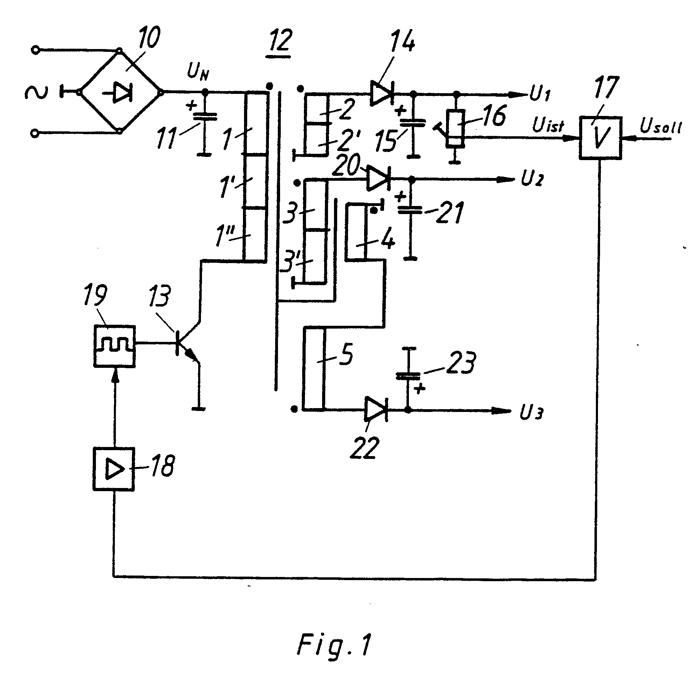

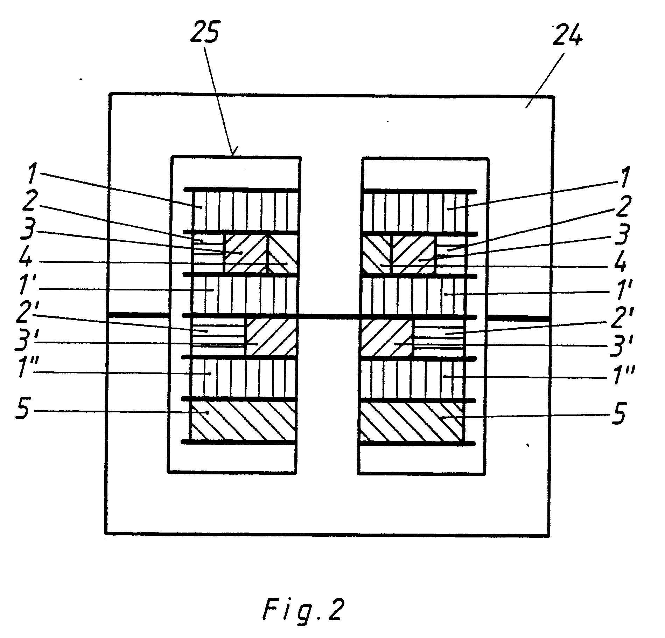

In Figur 2 ist beispielsweise ein besonders günstiger Aufbau eines Transformators dargestellt, bei welchem durch die Verteilung der Wicklungen in den Kammern die Kopplungen sehr unterschiedlich gemacht werden können. Zum Beispiel $K_L : K_F$ = 1 : 5. Bei einer notwendigen Windungszahl von N = 8 für die Spannung U3 genügt es, die Windungszahl N5 = 10 und N4 = 2 zu wählen. Die Verteilung der Wicklungen in den Kammern eines auf dem Kern 24 angeordneten Spulenkörpers 25, deren Bezeichnungen mit denen der Figur 1 übereinstimmen, geht eindeutig aus Figur 2 hervor.

**Patentansprüche**

1. Transformator für ein geregeltes Schaltnetzteil mit mehreren Sekundärwicklungen zur Erzeugung von geregelten Gleichspannungen, **dadurch gekennzeichnet,** daß eine erste Sekundärwicklung (4,5) aus einer ersten Teilwicklung (5), die im Bereich großer magnetischer Wechselwirkung mit einer zweiten Sekundärwicklung (3,3') angeordnet ist, sowie aus einer zweiten Teilwicklung (4), die im Bereich schwacher magnetischer Wechselwirkung mit der zweiten Sekundärwicklung (3,3') angeordnet ist, besteht, und daß die zweite Teilwicklung (4) zu der ersten Teilwicklung (5) einen entgegengesetzten Wickelsinn besitzt.

2. Transformator nach Anspruch 1, **dadurch gekennzeichnet,** daß die erste Sekundärwicklung (4, 5) die Betriebsspannung (U3) für eine Schaltung in einem elektronischen Gerät liefert, welche größere Lastschwankungen erzeugt.

3. Transformator nach Anspruch 2, **dadurch gekennzeichnet,** daß die erste Sekundärwicklung (4, 5) die Betriebsspannung (U3) für die Ton-Endstufe in einem Fernsehempfänger liefert.

4. Transformator nach Anspruch 3, **dadurch gekennzeichnet,** daß die zweite Sekundärwicklung (3, 3') eine Niedervoltspannung (U2) für Vorverstärkerstufen in dem Fernsehempfänger liefert.

5. Transformator nach Anspruch 1, 2, 3 oder 4, **dadurch gekennzeichnet,** daß sich der Wert des festen Kopplungsfaktors $K_F$ zum Wert des losen Kopplungsfaktors $K_L$ verhält wie die Windungszahl $N_L$ der lose gekoppelten Teilwicklung (5) zur Windungszahl $N_F$ der fest gekoppelten Teilwicklung (4) nach der Beziehung $K_F : K_L = N_L : N_F$.

**Claims**

1. A transformer for a controlled switched-mode power supply with several secondary windings for producing controlled d.c. voltages, **characterised in that** a first secondary winding (4,5) comprises a first winding part (5), which is arranged in the region of strong magnetic interaction with a second secondary winding (3,3'), and a second winding part (4), which is arranged in the region of weak magnetic interaction with the second secondary winding (3, 3'), and that the second winding part (4) has an opposite winding sense to the first winding part (5).

2. A transformer according to claim 1, **characterised in that** the first secondary winding (4,5) delivers the operating voltage (U3) for a circuit in an electronic device, which produces fairly large fluctuations in load.

3. A transformer according to claim 2, **characterised in** that the first secondary winding (4, 5) delivers the operating voltage (U3) for the sound output stage in a television receiver.

4. A transformer according to claim 3, **characterised in** that the second secondary winding (3, 3') delivers a low voltage (U2) for pre-amplifier stages in the television receiver.

5. A transformer according to claim 1, 2, 3 or 4, **characterised in that** the value of the firm coupling factor $K_F$ to the value of the loose coupling factor $K_L$ has a similar relationship to the turn number $N_L$ of the loosely coupled winding part (5) to the turn number $N_F$ of the firmly coupled winding part (4) according to the relationship $K_F : K_L = N_L : N_F$.

**Revendications**

1. Transformateur pour un bloc d'alimentation de commutation réglé avec plusieurs enroulements secondaires pour produire des tensions continues réglées, **caractérisé en ce** qu'un premier enroulement secondaire (4, 5) est constitué par une première fraction d'enroulement (5), qui est placée dans la zone de forte interaction magnétique avec un second enroulement secondaire (3, 3'), et par une seconde fraction d'enroulement (4) qui est placée dans la zone de faible interaction magnétique avec le second enroulement secondaire (3, 3') et que la seconde fraction d'enroulement (4) possède un sens d'enroulement opposé à celui de la première fraction d'enroulement (5).

2. Transformateur selon la revendication 1, **caractérisé en ce** que le premier enroulement secondaire (4, 5) livre la tension de fonctionnement (U3) pour un montage dans un appareil électronique qui produit d'importantes variations de charge.

3. Transformateur selon la revendication 2, **caractérisé en ce** que le premier enroulement secondaire (4, 5) livre la tension de fonctionnement (U3) pour l'étage audio de sortie d'un récepteur de télévision.

4. Transformateur selon la revendication 3, **caractérisé en ce** que le second enroulement secondaire (3, 3') livre une basse tension (U2) pour des étages de préamplification dans un récepteur de télévision.

5. Transformateur selon la revendication 1, 2, 3 ou 4, **caractérisé en ce** que la valeur du coefficient de couplage serré $K_F$ par rapport à la valeur de coefficient lâche $K_L$ se comporte comme le nombre de spires $N_L$ de la fraction d'enroulement à couplage lâche (5') par rapport au nombre de spires $N_F$ de la fraction d'enroulement à couplage serré (4) selon la relation $K_F : K_L = N_L : N_F$.

Fig.1

Fig.2